(19) Europäisches Patentamt
European Patent Office
Office européen des brevets

(11) EP 4 489 272 A1

(12) EUROPEAN PATENT APPLICATION

(43) Date of publication:
08.01.2025 Bulletin 2025/02

(21) Application number: 23183994.5

(22) Date of filing: 06.07.2023

(51) International Patent Classification (IPC):
H02M 1/00 (2006.01)    H02M 7/483 (2007.01)

(52) Cooperative Patent Classification (CPC):
H02M 7/4837; H02M 1/0058; H02M 7/483

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Hamilton Sundstrand Corporation
Charlotte, NC 28217 (US)

(72) Inventors:
• PEDROSO, Douglas Araujo
São Borja RS, 97670-000 (BR)
• CASTRO ÁLVAREZ, Ignacio
Gijón 33202 (ES)

(74) Representative: Dehns
10 Old Bailey
London EC4M 7NG (GB)

(54) N-LEVEL QSW FCML BUCK CONVERTER

(57) An n-level flying capacitor multi-level buck converter (900), for converting a DC input voltage (901) into a DC output voltage (915) provided at a load. The n-level flying capacitor multi-level buck converter is configured to: operate a first and second pairs of switching elements in a sequence to selectively apply a portion of the input voltage across the output filter; and operate the first and second pairs of switching elements such that each switching element turns on when a voltage across the switching element is zero.

Figure 9

## Description

### TECHNICAL FIELD

This disclosure relates to flying capacitor multi-level (FCML) DC to DC voltage converters.

### BACKGROUND

In various DC to DC voltage conversion applications, there are often large variations in either the input or output voltage. Various topologies of existing DC to DC voltage converters require a high degree of complexity of control of the circuit and/or have complex input EMI filtering requirements in order to accommodate these variations.

In various DC to DC voltage conversion applications, it may also be advantageous to reduce the voltage stresses across components. This may allow smaller components to be used in many applications. This may also lead to a prolonged lifetime of circuit components.

Other aims in many DC to DC voltage conversion applications include reducing losses, to reducing cooling requirements of the circuit. Reducing losses over certain components may result in a reduced cooling requirement for those components and/or it may result in prolonging the lifetime of those components.

In many DC to DC voltage applications, reducing the weight of the DC to DC voltage converter may also be of benefit.

### SUMMARY

When viewed from a first aspect, the present disclosure provides an n-level flying capacitor multi-level buck converter, for converting a DC input voltage into a DC output voltage provided at a load, comprising: an output filter comprising: an inductor arranged in series with an output capacitor and for arranging in series with the load; and the output capacitor arranged in series with the inductor and for arranging in parallel with the load; wherein the n-level flying capacitor multi-level buck converter comprises: a first pair of switching elements arranged in series with the DC input voltage; and a second pair of switching elements arranged in series with the DC input voltage; wherein each of the first and second pairs of switching elements comprises a first switching element and a second switching element; wherein the first switching element and the second switching element of the first pair of switching elements are arranged adjacent each other; wherein the first switching element of the second pair of switching elements is arranged adjacent to the first switching element of the first pair of switching elements; wherein the second switching element of the second pair of switching elements is arranged adjacent to the second switching element of the first pair of switching elements; and wherein the output filter is arranged in series with the first switching elements of the first and second pairs of switching elements, and in parallel with the second switching elements of the first and second pairs of switching elements; wherein the n-level flying capacitor multi-level buck converter further comprises a first flying capacitor in parallel with the first pair of switching elements; and wherein the n-level flying capacitor multi-level buck converter is configured to: operate the first and second pairs of switching elements in a sequence to selectively apply a portion of the input voltage across the output filter; and operate the first and second pairs of switching elements such that each switching element is switched on when a voltage across the switching element is zero.

In some examples, the switching elements comprise a switch, a diode and a (e.g. parasitic) capacitance in parallel.

In various examples, any switching elements using actively controlled power semiconductor technology, such as metal-oxide-semiconductor field-effect transistors (MOSFETs), may be used. In various examples, instead of MOSFETs any of insulated-gate bipolar transistors (IGBTs), high-electron-mobility transistors (HEMTs) or bidirectional switches are used as alternatives, or in combination with MOSFETs.

In some examples, the n-level flying capacitor multi-level buck converter further comprises a third pair of switching elements: wherein the third pair of switching elements is arranged in series with the DC input voltage; wherein the third pair of switching elements comprises a first switching element and a second switching element; wherein the first switching element of the third pair of switching elements is arranged adjacent to the first switching element of the second pair of switching elements; wherein the second switching element of the third pair of switching elements is arranged adjacent to the second switching element of the second pair of switching elements; wherein the output filter is arranged in series with the first switching element of the third pair of switching elements, and in parallel with the second switching element of the third pair of switching elements; and wherein the n-level flying capacitor multi-level buck converter further comprises a second flying capacitor in parallel with the second pair of switching elements; and wherein the n-level flying capacitor multi-level buck converter is configured to: operate the third pair of switching elements in a sequence to selectively apply a portion of the input voltage across the output filter; and operate the third pairs of switching elements such that each switching element is switched on when a voltage across the switching element is zero.

In some examples, the first switching element of each pair of switching elements is arranged to be switched off before the second switching element of each pair of switching elements is switched on; and the second switching element of each pair of switching elements is arranged to be switched off before the first switching element of each pair of switching elements is switched on.

In some examples, the n-level flying capacitor multi-level buck converter is arranged such that the current through the inductor is zero when the second switching element of each pair of switching elements is switched off.

In some examples, the n-level flying capacitor multi-level buck converter is arranged such that the current through the inductor is less than zero when the second switching element of each pair of switching elements is switched off.

In some examples, the n-level flying capacitor multi-level buck converter is arranged such that the current through the inductor is a predetermined value when the second switching element of each pair of switching elements is switched off.

In some examples, each pair of switching elements are arranged to operate out of phase with each other. Out of phase may be defined as operating asynchronously, i.e. not switching simultaneously.

In some examples, the pairs of switching elements are arranged to be triggered by a series of phase shifted pulses: wherein a phase shift of the phase shifted pulses corresponds to a number of active levels of the n-level flying capacitor multi-level buck converter; and wherein a pulse width of the phase shifted pulses corresponds to a duty cycle of the n-level flying capacitor multi-level buck converter.

In some examples, the n-level flying capacitor multi-level buck converter is configured to operate the pairs of switching elements to change a or the number of active levels of the n-level flying capacitor multi-level buck converter.

In some examples, the n-level flying capacitor multi-level buck converter is configured to reduce the number of active levels by switching on both the first switching element and the second switching element of the pair of switching elements arranged proximate to the DC input voltage.

In some examples, the n-level flying capacitor multi-level buck converter further comprises a third pair of switching elements: wherein the third pair of switching elements are arranged in series with the DC input voltage; wherein the third pair of switching elements comprises a first switching element and a second switching element; wherein the first switching element of the third pair of switching elements is arranged adjacent to the first switching element of the second pair of switching elements; wherein the second switching element of the third pair of switching elements is arranged adjacent to the second switching element of the second pair of switching elements; wherein the output filter is arranged in series with the first switching element of the third pair of switching elements, and in parallel with the second switching element of the third pair of switching elements; and wherein the n-level flying capacitor multi-level buck converter further comprises a flying capacitor in parallel with the second pair of switching elements; and wherein the n-level flying capacitor multi-level buck converter is configured to further reduce the number of active levels by switching on both the first switching element and the second switching element of the pair of switching elements adjacent to the pair of switching elements which are arranged proximate to the DC input voltage.

In some examples, the n-level flying capacitor multi-level buck converter is configured to change the number of active levels depending on at least one of the input voltage, the output voltage or the ratio between the input voltage and the output voltage.

In some examples, the n-level flying capacitor multi-level buck converter further comprises a controller arranged to generate a or the series of phase shifted pulses to trigger the pairs of switching elements of the n-level flying capacitor multi-level buck converter: wherein a or the phase shift of the phase shifted pulses corresponds to a or the number of active levels of the n-level flying capacitor multi-level buck converter; and wherein a or the pulse width of the phase shifted pulses corresponds to a or the duty cycle of the n-level flying capacitor multi-level buck converter.

In some examples, the controller further comprises a current feedback loop which adjusts a switching frequency of the switching elements based on a current through the inductor.

In some examples, the controller further comprises a voltage feedback loop which adjusts the duty cycle based on the at least one of the input voltage, the output voltage or the ratio between the input voltage and the output voltage.

When viewed from a second aspect, the present disclosure provides a method of operating an n-level flying capacitor multi-level buck converter, for converting a DC input voltage into a DC output voltage provided at a load, wherein the n-level flying capacitor multi-level buck converter comprises: an output filter comprising: an inductor arranged in series with an output capacitor and for arranging in series with the load; and the output capacitor arranged in series with the inductor and for arranging in parallel with the load; wherein the n-level flying capacitor multi-level buck converter comprises: a first pair of switching elements arranged in series with the DC input voltage; and a second pair of switching elements arranged in series with the DC input voltage; wherein each of the first and second pairs of switching elements comprises a first switching element and a second switching element; wherein the first switching element and the second switching element of the first pair of switching elements are arranged adjacent; wherein the first switching element of the second pair of switching elements is arranged adjacent to the first switching element of the first pair of switching elements; wherein the second switching element of the second pair of switching elements is arranged adjacent to the second switching element of the first pair of switching elements; and wherein the output filter is arranged in series with the first switching elements of the first and second pairs of switching elements, and in parallel with the second switching elements of the first and second pairs of switching elements; wherein the n-level flying capacitor multi-level buck converter further comprises a flying capacitor in parallel with the first pair of switching elements; wherein the method comprises: operating the first and second pairs of switching elements in a sequence to selectively apply a portion of the input voltage across the output filter; and operating the first and second pairs of switching elements such that each switching element is switched on when a voltage across the switching element is zero.

In some examples, the n-level flying capacitor multi-level buck converter further comprises a third pair of switching elements: wherein the third pair of switching elements is arranged in series with the DC input voltage; wherein the third pair of switching elements comprises a first switching element and a second switching element; wherein the first switching element of the third pair of switching elements is arranged adjacent to the first switching element of the second pair of switching elements; wherein the second switching element of the third pair of switching elements is arranged adjacent to the second switching element of the second pair of switching elements; wherein the output filter is arranged in series with the first switching element of the third pair of switching elements, and in parallel with the second switching element of the third pair of switching elements; and wherein the n-level flying capacitor multi-level buck converter further comprises a second flying capacitor in parallel with the second pair of switching elements; and the method further comprises: operating the third pair of switching elements in a sequence to selectively apply a portion of the input voltage across the output filter; and operating the third pairs of switching elements such that each switching element is switched on when a voltage across the switching element is zero.

In some examples, the method further comprises operating the first and second pairs of switching elements such that the first switching element of each pair of switching elements is switched off before the second switching element of each pair of switching elements is switched on; and the second switching element of each pair of switching elements is switched off before the first switching element of each pair of switching elements is switched on.

In some examples, the method further comprises operating each pair of switching elements such that the current through the inductor is zero when the second switching element of each pair of switching elements is switched off.

In some examples, the method further comprises operating each pair of switching elements such that the current through the inductor is less than zero when the second switching element of each pair of switching elements is switched off.

In some examples, the method further comprises operating each pair of switching elements such that the current through the inductor is a predetermined value when the second switching element of each pair of switching elements is switched off.

In some examples, the method further comprises operating each pair of switching elements out of phase with each other.

In some examples, the method further comprises triggering the pairs of switching elements with a series of phase shifted pulses: wherein a phase shift of the phase shifted pulses corresponds to a number of active levels of the n-level flying capacitor multi-level buck converter; and wherein a pulse width of the phase shifted pulses corresponds to a duty cycle of the n-level flying capacitor multi-level buck converter.

In some examples, the method further comprises operating the pairs of switching elements to change a or the number of active levels of the n-level flying capacitor multi-level buck converter.

In some examples, the method further comprises reducing the number of active levels by switching on both the first switching element and the second switching element of the pair of switching elements arranged proximate to the DC input voltage.

In some examples, the n-level flying capacitor multi-level buck converter further comprises a third pair of switching elements: wherein the third pair of switching elements is arranged in series with the DC input voltage; wherein the third pair of switching elements comprises a first switching element and a second switching element; wherein the first switching element of the third pair of switching elements is arranged adjacent to the first switching element of the second pair of switching elements; wherein the second switching element of the third pair of switching elements is arranged adjacent to the second switching element of the second pair of switching elements; wherein the output filter is arranged in series with the first switching element of the third pair of switching elements, and in parallel with the second switching element of the third pair of switching elements; and wherein the n-level flying capacitor multi-level buck converter further comprises a second flying capacitor in parallel with the second pair of switching elements; and the method further comprises further reducing the number of active levels by switching on both the first switching element and the second switching element of the pair of switching elements adjacent to the pair of switching elements which are arranged proximate to the DC input voltage.

In some examples, the method further comprises changing the number of active levels depending on at least one of the input voltage, the output voltage or the ratio between the input voltage and the output voltage.

In some examples, the n-level flying capacitor multi-level buck converter further comprises a controller; and the method further comprises generating a or the series of phase shifted pulses to trigger the pairs of switching elements of the n-level flying capacitor multi-level buck converter: wherein a or the phase shift of the phase shifted pulses corresponds to a or the number of active levels of the n-level flying capacitor multi-level buck converter; and wherein a or the pulse width of the phase shifted pulses corresponds to a or the duty cycle of the n-level flying capacitor multi-level buck converter.

In some examples, the controller further comprises a current feedback loop; and the method further comprises adjusting a switching frequency of the switching elements based on a current through the inductor.

In some examples, the controller further comprises a voltage feedback loop; and the method further comprises adjusting the duty cycle based on the at least one of the input voltage, the output voltage or the ratio between the input voltage and the output voltage.

When viewed from a third aspect, the present disclosure provides an n-level flying capacitor multi-level buck converter, for converting a DC input voltage into a DC output voltage provided at a load, comprising: an output filter comprising: an inductor arranged in series with an output capacitor and for arranging in series with the load; and the output capacitor arranged in series with the inductor and for arranging in parallel with the load; wherein the n-level flying capacitor multi-level buck converter comprises: a first pair of switching elements arranged in series with the DC input voltage; and a second pair of switching elements arranged in series with the DC input voltage; wherein each of the first and second pairs of switching elements comprises a first switching element and a second switching element; wherein the first switching element and the second switching element of the first pair of switching elements are arranged adjacent each other; wherein the first switching element of the second pair of switching elements is arranged adjacent to the first switching element of the first pair of switching elements; wherein the second switching element of the second pair of switching elements is arranged adjacent to the second switching element of the first pair of switching elements; and wherein the output filter is arranged in series with the first switching elements of the first and second pairs of switching elements, and in parallel with the second switching elements of the first and second pairs of switching elements; wherein the n-level flying capacitor multi-level buck converter further comprises a first flying capacitor in parallel with the first pair of switching elements; and wherein the n-level flying capacitor multi-level buck converter is configured to operate the pairs of switching elements to change a number of active levels of the n-level flying capacitor multi-level buck converter.

In some examples, the n-level flying capacitor multi-level buck converter is further configured to: operate the first and second pairs of switching elements in a sequence to selectively apply a portion of the input voltage across the output filter; and operate the first and second pairs of switching elements such that each switching element is switched on when a voltage across the switching element is zero.

It will be appreciated that the optional features of the first aspect of the present invention relate equally to this aspect of the disclosure.

When viewed from a fourth aspect, the present disclosure provides a method of operating an n-level flying capacitor multi-level buck converter, for converting a DC input voltage into a DC output voltage provided at a load, wherein the n-level flying capacitor multi-level buck converter comprises: an output filter comprising: an inductor arranged in series with an output capacitor and for arranging in series with the load; and the output capacitor arranged in series with the inductor and for arranging in parallel with the load; wherein the n-level flying capacitor multi-level buck converter comprises: a first pair of switching elements arranged in series with the DC input voltage; and a second pair of switching elements arranged in series with the DC input voltage; wherein each of the first and second pairs of switching elements comprises a first switching element and a second switching element; wherein the first switching element and the second switching element of the first pair of switching elements are arranged adjacent; wherein the first switching element of the second pair of switching elements is arranged adjacent to the first switching element of the first pair of switching elements; wherein the second switching element of the second pair of switching elements is arranged adjacent to the second switching element of the first pair of switching elements; and wherein the output filter is arranged in series with the first switching elements of the first and second pairs of switching elements, and in parallel with the second switching elements of the first and second pairs of switching elements; wherein the n-level flying capacitor multi-level buck converter further comprises a flying capacitor in parallel with the first pair of switching elements; wherein the method comprises operating the pairs of switching elements to change a number of active levels of the n-level flying capacitor multi-level buck converter.

In some examples, the method further comprises: operating the first and second pairs of switching elements in a sequence to selectively apply a portion of the input voltage across the output filter; and operating the first and second pairs of switching elements such that each switching element is switched on when a voltage across the switching element is zero.

It will be appreciated that the optional features of the second aspect of the present invention relate equally to this aspect of the disclosure.

## BRIEF DESCRIPTION OF DRAWINGS

One or more non-limiting examples will now be described, by way of example only, and with reference to the accompanying figures in which:

Figure 1 shows a three-level FCML buck converter;
Figure 2 shows various waveforms during operation of a three-level FCML buck converter during QSW/TCM mode of operation;
Figure 3a shows a state plane representation of the switching cycle of a three-level FCML buck converter with three different output voltages;
Figure 3b shows a state plane representation of the switching cycle of a three-level FCML buck converter operating in TCM;
Figure 4 shows a four-level FCML buck converter;
Figure 5 shows an n-level FCML buck converter;
Figure 6 shows a graph of switching frequency vs input voltage for a given output voltage for several different level FCML buck converters operating QSW;
Figure 7 shows a graph of switching frequency vs input voltage for a given output voltage for a three-level FCML buck converter, an eight-level FCML buck converter, and an eight-level FCML buck converter switching between operating as a three-level FCML buck converter and an eight-level FCML buck converter;
Figure 8a shows a five-level FCML buck converter;
Figure 8b shows the equivalent circuit for a five-level FCML buck converter operating as a four-level FCML buck converter;
Figure 8c shows the equivalent circuit for a five-level FCML buck converter operating as a three-level FCML buck converter;
Figure 9 shows a n-level FCML buck converter and a controller for the n-level FCML buck converter;
Figures 10a, 10b and 10c show the equivalent circuit states for QSW/ZVS switching for a four-level FCML buck converter;
Figure 11 shows a method of operation of an n-level FCML buck converter, such as the n-level FCML buck converters of figures 5 and 9 operating ZVS; and
Figure 12 shows a method of operation of an n-level FCML buck converter, such as the n-level FCML buck converters of figures 5 and 9 operating in a level switcher mode of operation.

## DETAILED DESCRIPTION

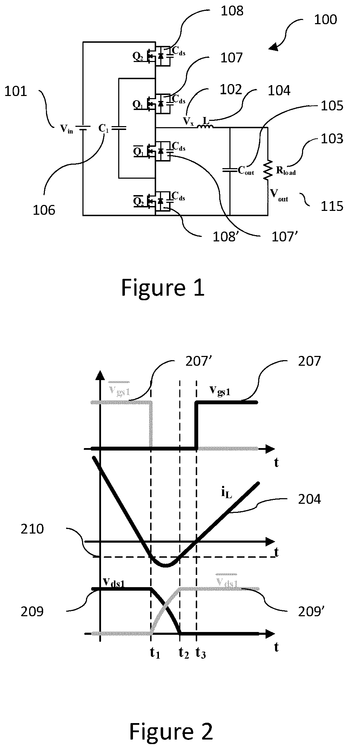

Figure 1 shows a three-level FCML buck converter 100.

Figure 1 shows: an input voltage $V_{in}$ 101, a flying capacitor $C_1$ 106, a square wave voltage $V_x$ 102, a first pair of switching elements $Q_1$ 107 and $\overline{Q_1}$ 107', a second pair of switching elements $Q_2$ 108 and $\overline{Q_2}$ 108', a load $R_{load}$ 103 and an output filter comprising an inductor L 104 and an output capacitor $C_{out}$ 105. An output voltage $V_{out}$ 115 is applied across the load $R_{load}$ 103.

Switching elements $Q_1$ 107 and $\overline{Q_1}$ 107' operate as a pair, such that at any given time only one of $Q_1$ 107 and $\overline{Q_1}$ 107' is turned on, while the other is turned off. Similarly, switching elements $Q_2$ 108 and $\overline{Q_2}$ 108' operate as a pair, such that at any given rime only one of $Q_2$ 108 and $\overline{Q_2}$ 108' is turned on, while the other is turned off. The first pair of switching elements, $Q_1$ 107 and $\overline{Q_1}$ 107', operate out of phase with the second pair of switching elements, $Q_2$ 108 and $\overline{Q_2}$ 108'.

There are two modes of operation of the three-level FCML buck converter 100 depending on the duty cycle. In the first mode of operation, the duty cycle is greater than half, i.e. $Q_1$ 107 and $Q_2$ 108 are each turned on for more than half of the cycle time, and the square wave voltage $V_x$ 102 varies between $V_{in}/2$ and $V_{in}$ 101. In the second mode of operation, the duty cycle is less than half, i.e. $Q_1$ 107 and $Q_2$ 108 are both turned on for less than half of the cycle time, and the square wave voltage $V_x$ 102 varies between zero and $V_{in}$ 101.

The first mode of operation of the three-level FCML buck converter 100 will be described with reference to various states of the circuit 100. It should be understood that when $Q_1$ 107 is on $\overline{Q_1}$ 107' is off and vice-versa. It should also be understood that when $Q_2$ 108 is on $\overline{Q_2}$ 108' is off and vice-versa.

In the first state $Q_1$ 107 is on and $Q_2$ 108 is on, and therefore $V_x$ 102 is equal to $V_{in}$ 101. In the second state $Q_2$ 108 turns off; hence $Q_1$ 107 is on and $Q_2$ 108 is off, and therefore $V_x$ 102 is equal to the voltage $V_c$ across the flying capacitor $C_1$ 106. In the third state $Q_2$ 108 turns back on; hence the third state is equivalent to the first state and $V_x$ 102 is equal to $V_{in}$ 101. In the fourth state $Q_1$ 107 turns off; hence $Q_1$ 107 is off and $Q_2$ 108 is on, and therefore $V_x$ 102 is equal to $V_{in}$ 101 minus the voltage $V_c$ across the flying capacitor $C_1$ 106. In the final state, $Q_1$ 107 turns back on, and the circuit state is equivalent to the first state hence $V_x$ 102 is equal to $V_{in}$ 101. Typically, the voltage $V_c$ across the flying capacitor $C_1$ 106 is equal to $V_{in}/2$, and therefore the square wave voltage $V_x$ 102 alternates between $V_{in}$ 101 and $V_{in}/2$.

The second mode of operation of the three-level FCML buck converter 100 will be described with reference to various states of the circuit 100.

In the first state $Q_1$ 107 is off and $Q_2$ 108 is off, and therefore $V_x$ 102 is equal to zero. In the second state $Q_2$ 108 turns on; hence $Q_1$ 107 is off and $Q_2$ 108 is on, and therefore $V_x$ 102 is equal to $V_{in}$ 101 minus the voltage $V_c$ across the flying capacitor $C_1$ 106. In the third state $Q_2$ 108 turns back off; hence the third state is equivalent to the first state and $V_x$ 102 is equal to zero. In the fourth state $Q_1$ 107 turns on; hence $Q_1$ 107 is on and $Q_2$ 108 is off, and therefore $V_x$ 102 is equal to the voltage $V_c$ across the flying capacitor $C_1$ 106. In the final state, $Q_1$ 107 turns back off, and the circuit state is equivalent to the

first state hence $V_x$ 102 is equal to zero. Typically, the voltage $V_c$ across the flying capacitor $C_1$ 106 is equal to $V_{in}/2$, and therefore the square wave voltage $V_x$ 102 alternates between zero and $V_{in}/2$.

The output filter (comprising the inductor L 104 and the output capacitor $C_{out}$ 105) filters out AC components of the square wave voltage $V_x$ 102. Therefore, a DC output voltage $V_{out}$ is applied to the load $R_{load}$ 103. This DC output voltage $V_{out}$ is the stepped-down input voltage $V_{in}$ 101. The ratio between $V_{in}$ 101 and the voltage $V_{out}$ applied to the load $R_{load}$ 103 is dependent on the duty cycle.

The three-level FCML buck converter 100 is known as a three-level converter as it is able to operate between three voltage levels: zero, $Vi_n/2$ and $V_{in}$ 101.

When $\overline{Q_1}$ 107' is turned off and $Q_1$ 107 is turned on, the voltage $V_{ds1\_}$ across the drain source capacitance $C_{ds}$ of $\overline{Q_1}$ 107' charges towards $V_c$. $V_c$ is the voltage across the flying capacitor $C_1$ 106, which in this example is $V_{in}/2$. Hence, in this example, the voltage $V_{ds1}$ charges towards $V_{in}/2$. At the same time, the voltage $V_{ds1}$ across the drain source capacitance $C_{ds}$ of $Q_1$ 107 discharges to zero.

A mode of operation of the switching elements $Q_1$ 107 and $\overline{Q_1}$ 107' enables $Q_1$ 107, and $\overline{Q_1}$ 107', to be switched on when the voltage, $V_{ds1}$ and $V_{ds1}$, across the respective drain source capacitance $C_{ds}$ is equal to zero. This is known as zero voltage switching (ZVS), and reduces switching losses over the switching elements, $Q_1$ 107 and $\overline{Q_1}$ 107'. The same mode of operation can be applied to enable the second pair of switching elements $Q_2$ 108 and $\overline{Q_2}$ 108' to turn on ZVS.

Figure 2 shows various waveforms during operation of the three-level FCML buck converter 100 of Figure 1 during this ZVS mode of operation. Figure 2 shows the gate-source voltage $V_{gs1}$ 207 of $Q_1$ 107, the gate-source voltage $V_{gs1\_}$ 207' of $\overline{Q_1}$ 107', the current $i_L$ 204 through the inductor L 104, the voltage $V_{ds1}$ 209 across the drain-source capacitance $C_{ds}$ of $Q_1$ 107 and the voltage $V_{ds1}$ 209' across the drain-source capacitance $C_{ds}$ of $\overline{Q_1}$ 107'. Switching on $Q_1$ 107 ZVS may be achieved by allowing the voltage $V_{ds1}$ 209 across the drain source capacitance $C_{ds}$ of Q1 107 to fully discharge, i.e. to reach zero, before switching on $Q_1$ 107.

As can be seen in Figure 2, this may be achieved by switching off $\overline{Q_1}$ 107' at a time $t_1$, which corresponds with the current $i_L$ 204 through the inductor L 104 reaching a value of $i_{zvs}$ 210. This ZVS current $i_{zvs}$ 210 is equal or smaller than zero. Switching off $\overline{Q_1}$ 107' at $t_1$ results in a resonance between the inductor L 104 and drain-source capacitances $C_{ds}$ of $Q_1$ 107 and $\overline{Q_1}$ 107'. Consequently, the drain-source capacitances $C_{ds}$ of $Q_1$ 107 and $\overline{Q_1}$ 107' will be respectively discharged and charged. At $t_2$, the voltage $V_{ds1}$ 209 across the drain source capacitance $C_{ds}$ of $Q_1$ 107 has fully discharged. Therefore, $Q_1$ 107 may be switched on ZVS at $t_3$, any time after $t_2$.

This mode of operation is known as quasi-square wave / zero voltage switching (QSW/ZVS). The value of $i_{zvs}$ 210 is critical in ZVS operation of each of the pairs switching elements $Q_1$ 107 and $\overline{Q_1}$ 107', and $Q_2$ 108 and $\overline{Q_2}$ 108'. Typically, the value of $i_{zvs}$ 210 will be the same for all transitions, in other words the value of $i_{zvs}$ 210 will be the same for the first pair of switching elements $Q_1$ 107 and $\overline{Q_1}$ 107' and the second pair of switching elements $Q_2$ 108 and $\overline{Q_2}$ 108'. When $i_{zvs}$ 210 is less than zero during QSW operation, this is known as quasi-square wave triangular conduction mode zero voltage switching (QSW/TCM/ZVS) operation.

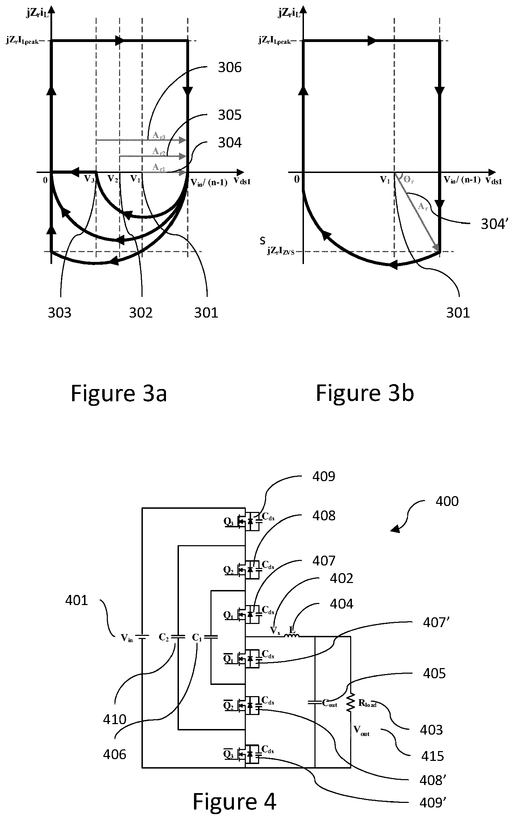

Referring to Figure 3a, a state plane representation of a switching cycle with three different output voltages is shown with $i_{zvs}$ 210 equal to zero. The three different desired output voltages are V, 301, $V_2$ 302 and $V_3$ 303. Each output voltage $V_1$, $V_2$ and $V_3$ are associated with different resonance vectors having different resonant vector lengths, $A_{r1}$ 304, $A_{r2}$ 305, and $A_{r3}$ 306 respectively.

If the desired output voltage is $V_3$ 303, the voltage $V_{ds1}$ 209 across the drain source capacitance $C_{ds}$ of $Q_1$ 107 reaches zero during the resonance, therefore QSW/ZVS can be achieved.

If the desired output voltage is $V_2$ 302, this is the limit case to achieve QSW/ZVS for $i_{zvs}$ equal to zero.

However, for a desired output voltage $V_1$ 301, the vector length $A_{r1}$ is not large enough to ensure ZVS operation. Therefore, $Q_1$ 107 cannot turn on ZVS because the voltage $V_{ds1}$ 209 across the drain source capacitance $C_{ds}$ of $Q_1$ 107 has not fully discharged when $Q_1$ 107 must turn on.

The minimum input-to-output voltage relation required to achieve ZVS in a traditional two-level buck converter using $i_{zvs}$ equal to zero can be defined as $V_{in} > 2V_{out}$.

The input-to-output voltage relation required to achieve QSW/ZVS in a n-level FCML buck converter using $i_{zvs}$ 210 equal to zero can be defined as $V_{in} \geq 2V_{out}(n-1)$. Hence for the three-level FCML buck converter 100 of Figure 1, the input-to-output voltage relation required between $V_{in}$ 101 and $V_{out}$, the voltage applied across the load $R_{load}$ 103, is $V_{in} \geq 4V_{out}$.

However, as noted above, $i_{zvs}$ 210 may be set to values smaller than zero to include output voltages larger than $V_2$ 302 in the ZVS operation. This concept of having a negative $i_{zvs}$ 210 is known as triangular condition mode (TCM) operation. Figure 3b shows that by allowing a certain negative value for $i_{zvs}$ 210, the initial conditions of the resonance are changed, therefore increasing the $A_r$ 304' vector length. Therefore, ZVS operation can still be achieved for output voltages larger than $V_2$ 302, such as $V_1$ 301.

Operation of multi-level FCML buck converters using QSW/ZVS and QSW/TCM/ZVS modes of operation is a novel approach to operation of multi-level FCML buck converters. These operation modes may result in all of the benefits associated with soft switching operation of the switching elements, such as lower switching losses, lower cooling requirements and/or prolonged lifetime of the switching elements.

Figure 4 shows a four-level FCML buck converter 400. Figure 4 shows an input voltage $V_{in}$ 401, a first flying capacitor $C_1$ 406, an output filter voltage $V_x$ 402, a first pair of switching elements $Q_1$ 107 and $\overline{Q_1}$ 107', a second pair of switching elements $Q_2$ 408 and $\overline{Q_2}$ 108', a third pair of switching elements $Q_3$ 409 and $Q_3$ 409', a second flying capacitor $C_2$ 410, a load $R_{load}$ 403 and an output filter (comprising an inductor L 404 and an output capacitor $C_{out}$ 405). An output voltage $V_{out}$ 415 is applied to the load $R_{load}$ 403.

Typically, the voltage $V_{c1}$ across the flying capacitor $C_1$ 406 is $V_{in}/3$, and the voltage $V_{c2}$ across the flying capacitor $C_2$ 410 is $2V_{in}/3$. Hence, any of four voltage levels: zero, $Vi_n/3$, $2V_{in}/3$ or $V_{in}$ 401 may be applied to $V_x$ 402. Therefore, this circuit 400 is a four-level converter.

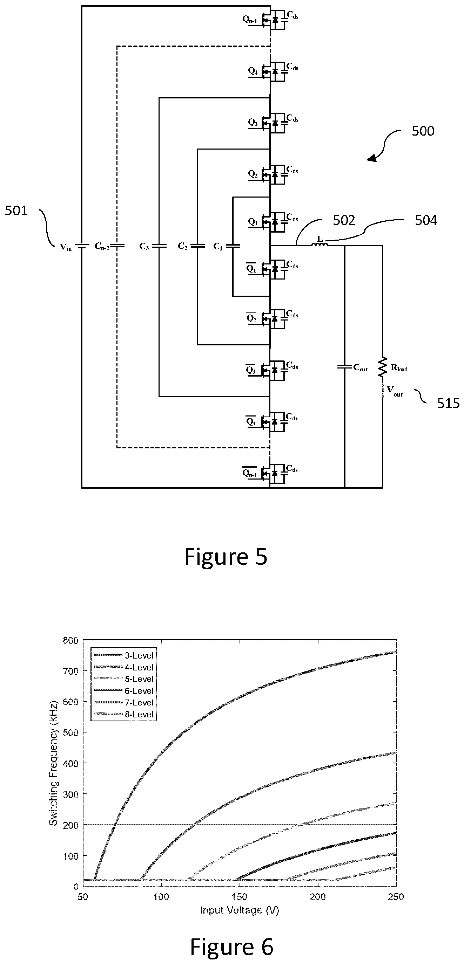

Figure 5 shows a n-level flying capacitor multi-level (FCML) buck converter 500. This topology can apply any number of n voltage levels to the output filter voltage $V_x$ 502 between zero and $V_{in}$ 501.

The general QSW/ZVS voltage condition for the n-level FCML buck converter 500, for $i_{zvs}$ equal to zero, can be defined in terms of duty cycle D and the number of levels n as:

$$0 \leq D < \frac{1}{n-1}$$

Hence, for higher level FCML buck converters, the duty cycle for which QSW/ZVS can be achieved, without operating TCM, reduces. The ratio of output voltage $V_{out}$ to input voltage $V_{in}$ depends on the duty cycle. Therefore, higher level FCML buck converters cannot achieve the same ratio of $V_{out}$ to $V_{in}$ as lower level FCML buck converters unless they operate TCM, i.e. a lower maximum value of $V_{out}$ can be achieved for the same $V_{in}$.

A traditional two-level QSW/ZVS buck converter switching period $T_{sw}^{2L}$ can be defined as:

$$T_{sw}^{2L} = 2L_{buck} \left( \frac{P_{out}}{V_{out}} - i_{ZVS_{set}} \right) \frac{V_{in}}{V_{out}(V_{in} - V_{out})}$$

The n-level QSW/ZVS FCML buck converter 500 switching period $T_{sw}^{nL}$ can be defined as:

$$T_{sw}^{nL} = 2L_{buck} \left( \frac{P_{out}}{V_{out}} - i_{ZVS_{set}} \right) \left( \frac{1}{v_{on}} - \frac{1}{v_{off}} \right)(n-1)$$

Hence, the switching period $T_{sw}^{nL}$ varies with both the number of levels of the n-level FCML buck converter 500 and the ratio between output voltage $V_{out}$ to input voltage $V_{in}$. Therefore, if the ratio of $V_{out}$ to $V_{in}$ varies for a given number of levels of the FCML converter, so does the switching period. Note that $L_{buck}$ in this equation is the inductance of inductor L 504. $V_{on}$ is the voltage during the magnetization of the inductor (i.e. first switching element is on), $V_{off}$ is the voltage over the inductor during the demagnetization (i.e. first switching element is off).

As can be seen in Figure 6, the input voltage range of operation is higher in QSW/ZVS, without operating TCM, for lower level FCML buck converters. However, a lower number of FCML converter levels also results in a high variation in switching frequency as the ratio of $V_{out}$ to $V_{in}$ varies. This variation in switching frequency is detrimental for design of the input EMI filter to the DC to DC voltage converter.

It can also be seen in Figure 6 that at a higher number of levels of the FCML buck converter, the QSW/ZVS range of operation significantly reduces. This forces the converter to operate in TCM at low frequencies, i.e. $i_{zvs}$ smaller than zero, to achieve ZVS switch on. In theory it may be possible for higher level FCML buck converters to switch on ZVS at low frequencies by operating TCM, with increasingly negative values of $i_{zvs}$. However, in practice increasingly negative values of $i_{zvs}$ will result in increasingly higher conduction losses. These conduction losses will eventually negate the benefits of reduced switching losses associated with ZVS operation. The example illustrated in Figure 6 considers a 400 W converter with a 28 V output voltage, a 500 nH output inductor and a minimum switching frequency of 20 kHz.

Based on the above equation, and analysis of the n-level FCML buck converter 500, for a given desired output voltage $V_{out}$ it is possible to operate the converter with a different active number of levels depending on the input voltage. This enables variation of the switching frequency to be reduced, while also ensuring QSW/ZVS operation may be achieved over the full range of input voltages without operating TCM, or operating TCM with only a relatively small negative value of

$i_{zvs}$ to avoid the conduction losses associated with larger negative values of $i_{zvs}$. Reducing the variation of the switching frequency can be particularly beneficial, as variable switching frequency may penalize the overall design, and particularly the EMI filter at the input to the converter (not shown).

The level switcher mode of operation may be defined as switching the number of active levels according to the ratio between the input voltage and desired output voltage of the converter. In some examples, the input voltage and the output voltage may both vary. In some examples, where the desired output voltage is constant and the input voltage varies, the level switcher mode of operation may switch the number of active levels according to the input voltage. In further examples, where only the desired output voltage varies while the input voltage is constant, the level switcher mode of operation may switch the number of active levels according to the output voltage.

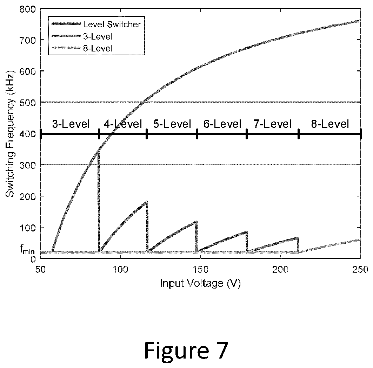

Figure 7 presents a comparison of the variation in switching frequency between a standard three-level QSW/ZVS FCML Buck Converter 100, an eight-level TCM/QSW/ZVS FCML Buck Converter, and an eight-level QSW/ZVS FCML Buck Converter which switches the number of active levels according to the input voltage, i.e. operating in the level switcher mode. The level switcher mode of operation shown in Figure 7 halves the switching frequency range when compared with the three-level QSW FCML Buck Converter. The level switcher mode of operation also ensures QSW/ZVS operation through the entire input voltage range, while ensuring that $i_{zvs}$ does not need to be set at a large negative current. Whereas, QSW/ZVS cannot be achieved by the eight-level FCML Buck Converter unless it operates TCM with a large negative value of $i_{zvs}$.

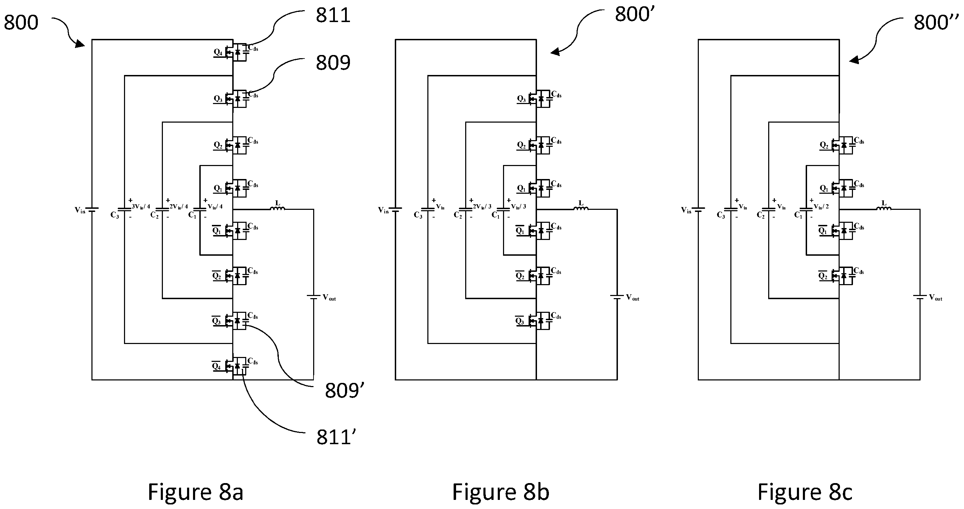

Figure 8a shows a five-level FCML buck converter 800 with all five levels in use. By turning on both $Q_4$ 811 and $\overline{Q_4}$ 811', a level of the five-level FCML buck converter 800 is effectively switched off. This results in the equivalent circuit 800' shown in figure 8b, which is equivalent to a four-level FCML buck converter. Furthermore, by also turning on both $Q_3$ 809 and $\overline{Q_3}$ 809', another level of the FCML buck converter may be switched off. This results in the equivalent circuit 800" shown in figure 8c, which is equivalent to a three-level FCML buck converter.

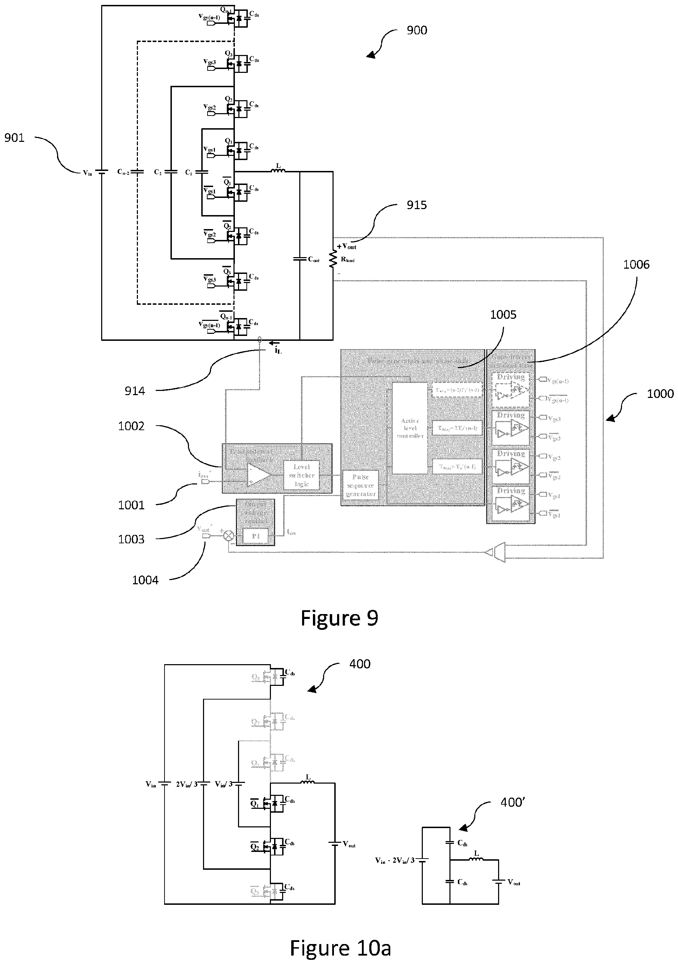

Figure 9 shows an example of a controller 1000 for an n-level FCML buck converter 900 operating QSW/ZVS. The controller 1000 has a current feedback loop 1002, which adjusts the switching frequency of the switching elements based on the difference between the current through the inductor $i_L$ 914 and $i_{zvs}{}^*$ 1001, the zero voltage switching current value required for the converter to operate ZVS. In this example, the value of $i_{zvs}{}^*$ 1001 may be zero or below zero, i.e. the n-level FCML buck converter 900 may operate QSW/TCM to achieve ZVS. This current feedback loop 1002 effectively ensures that switching elements are triggered to turn off when $i_L$ 914 is equal to $i_{zvs}{}^*$ 1001 to ensure ZVS switch on operation.

The controller 1000 of figure 9 also has a voltage feedback loop 1002. This voltage feedback loop 1002 adjusts the duty cycle by adjusting the pulse width of the trigger signals for the switching elements, i.e. the duration that the switching elements are on for. The voltage feedback loop 1003 adjusts the pulse width based on the difference between the output voltage $V_{out}$ 915 and the desired output voltage $V_{out}{}^*$ 1004.

Based on the inputs received from the current feedback loop 1002 and the voltage feedback loop 1003, the pulse generator 1005 generates a series of phase shifted pulses. The pulse generator 1005 may also adjust control of the n-level FCML buck converter 900 to vary the number of active levels depending on either the input voltage $V_{in}$ 901, the output voltage $V_{out}$ 915 or both the input voltage $V_{in}$ 901 and the output voltage $V_{out}$ 915. The choice of basis for varying the number of active levels of the n-level FCML buck converter 900 may be based on whether variation is expected of the input voltage $V_{in}$ 901, the output voltage $V_{out}$ 915 or both the input voltage $V_{in}$ 901 and the output voltage $V_{out}$ 915.

The phase shift of the pulses generated by the pulse generator 1005 depends on the number of active levels of the n-level FCML buck converter 900. The switching frequency depends on the QSW/ZVS operation of the n-level FCML buck converter 900, and the pulse width depends on the duty cycle. The phase shifted pulses are received as inputs to the gate drivers 1006 of the switching elements of the n-level FCML buck converter 900 to trigger each of the switching elements of the n-level FCML buck converter 900.

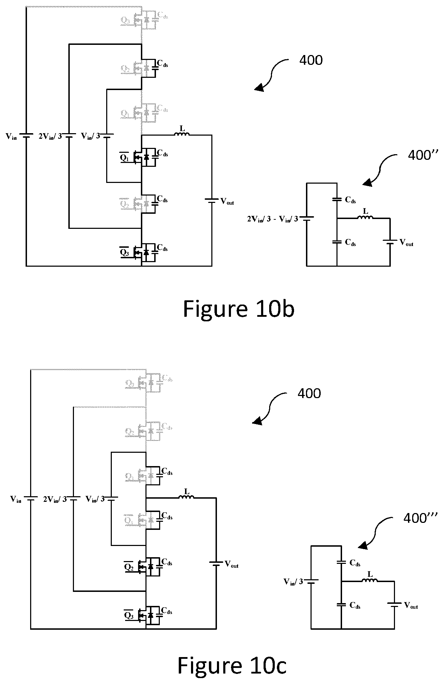

Figures 10a, 10b and 10c show the circuit states during QSW/ZVS switch on for the four-level FCML buck converter 400 of figure 4 for $Q_1$ 407, $Q_2$ 408 and $Q_3$ 409 respectively. In each figure, the non-bold components of the circuit 400 indicate that these circuit components are not conducting. The respective resulting equivalent circuits in each case are also shown in figures 10a, 10b and 10c. The equivalent circuit 400' during $Q_3$ 409 switching on QSW/ZVS is shown in Figure 10a. The equivalent circuit 400" during $Q_2$ 408 switching on QSW/ZVS is shown in Figure 10b. The equivalent circuit 400''' during $Q_1$ 407 switching on QSW/ZVS is shown in Figure 10c. Figures 10a to 10c show that for a 4-level FCML converter the transitions between each pair of switching elements, $Q_1$ 107 and $\overline{Q_1}$ 107', $Q_2$ 408 and $\overline{Q_2}$ 108', and $Q_3$ 409 and $\overline{Q_3}$ 409', may be achieved QSW/ZVS. For each transition, the same set of equations, described above, is applicable and therefore the same value of $i_{zvs}$ may be chosen for each transition.

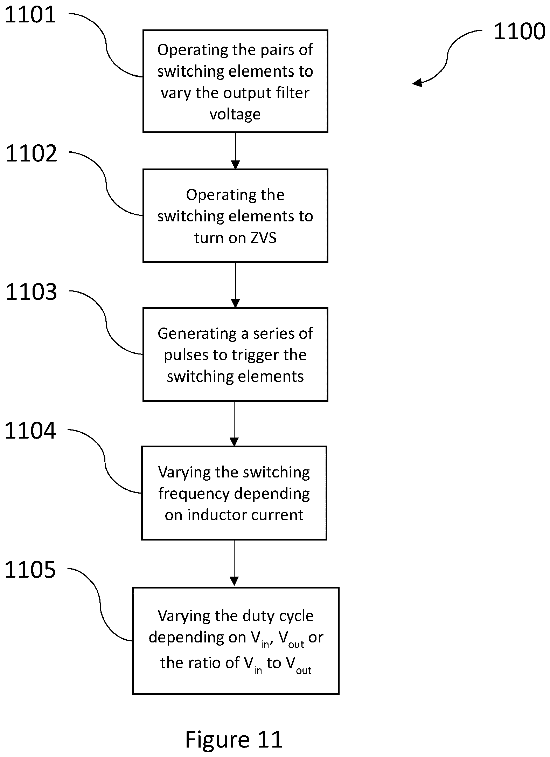

Figure 11 shows a method 1100 of operation of an n-level FCML buck converter, such as the n-level FCML buck converters 500, 900 of figures 5 and 9 operating ZVS. The method is described below with reference to figures 5 and 11.

The method comprises a first step 1101 of operating the pairs of switching elements, i.e. the first pair of switching elements $Q_1$ and $\overline{Q_1}$ to the final pair of switching elements $Q_{n-1}$ and $Q_{n-1}$, in a sequence to selectively apply the voltage across the respective flying capacitor, i.e. $C_1$ to $C_{n-2}$, or the input voltage $V_{in}$ 501 to the output filter voltage 502.

The method 1100 further comprises a step 1102 of operating the pairs of switching elements such that each switching element turns on when the voltage across the switching element is zero, i.e. each switching element turns on ZVS.

This may be achieved by turning off a first switching element, e.g. $Q_1$ to $Q_{n-1}$, before turning on a second switching element, e.g. $\overline{Q_1}$ to $\overline{Q_{n-1}}$, when operating the respective pair of switching elements; and vice-versa when turning on the first switching element of each pair.

When turning on the second switching element from a pair of switching elements, turning off of the first switching element may occur when the current through the inductor 504 is a pre-determined value of $i_{zvs}$. This pre-determined value of $i_{zvs}$ may be zero or less than zero. This may ensure that the second switching element can turn on ZVS. A corresponding process may be used to turn on the first switching element from a pair of switching elements ZVS, by turning off the second switching element when the current through the inductor 504 is a pre-determined value of $i_{zvs}$.

The pairs of switching elements may operate in phase (or synchronously), i.e. the first switching element from each pair of switching element may all turn on and off simultaneously; and the second switching element from each pair of switching element may all turn on and off simultaneously. This would result in the output filter voltage 502 alternating between zero and Vin 501.

However, the pairs of switching elements may also operate out of phase (or asynchronously) in order to vary the output filter voltage 502 between any one of n voltage levels.

The method 1100 may further comprise generating a series of pulses 1103 in order to trigger the switching elements of the n-level FCML buck converter 500. The phase shift of the pulses may correspond with the number of active levels of the n-level FCML buck converter 500. In some examples, the pulses may be equally spaced apart within one cycle of operation of the n-level FCML buck converter 500. The pulse width may correspond with the duty cycle of the n-level FCML buck converter 500.

The method may further comprise varying the switching frequency 1104 of the n-level FCML buck converter 500 depending on current through the inductor 504. Varying the switching frequency may comprise varying the frequency of the series of phase shifted pulses.

The method may further comprise varying the duty cycle 1105 of the FCML buck converter depending on at least one of the input voltage $V_{in}$ 501, the output voltage $V_{out}$ or the ratio of the input voltage $V_{in}$ 501 to the output voltage $V_{out}$. Varying the duty cycle may comprise varying the pulse width of the series of phase shifted pulses.

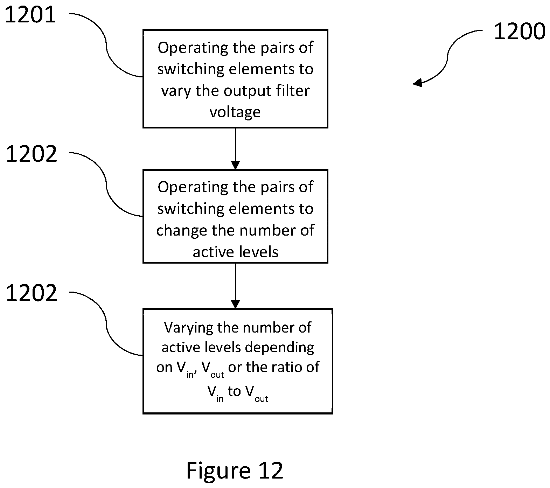

Figure 12 shows a method 1200 of operation of an n-level FCML buck converter, such as the n-level FCML buck converters 500, 900 of figures 5 and 9 operating in a level switcher mode of operation. The level switcher method 1200 is described below with reference to figures 5 and 11. The level switcher method 1200 may be performed in combination with the ZVS method 1100, i.e. the n-level FCML buck converter may operate ZVS according to the method 1100 while also operating in the level switcher mode according to the method 1200. Hence, any or all of the method steps in the method 1100 of operating ZVS may be applied to the method 1200 of operating in a level switcher mode.

The method 1200 comprises a first step 1201 of operating the pairs of switching elements, i.e. the first pair of switching elements $Q_1$ and $\overline{Q_1}$ to the final pair of switching elements $Q_{n-1}$ and $\overline{Q_{n-1}}$, in a sequence to selectively apply the voltage across the respective flying capacitor, i.e. $C_1$ to $C_{n-2}$, or the input voltage $V_{in}$ 501 to the output filter voltage 502.

The method 1200 further comprises a second step 1202 of operating the pairs of switching elements to change the number of active levels of the n-level flying capacitor multi-level buck converter. The number of active levels may be reduced by turning on both of the switching elements of the final pair of switching elements $Q_{n-1}$ and $\overline{Q_{n-1}}$. The number of active levels may be further reduced by turning on both of the switching elements of the penultimate pair of switching elements $Q_{n-2}$ and $\overline{Q_{n-2}}$ and so on. This process of reducing the active number of levels of an n-level FCML buck converter has also been shown in figures 8a to 8c and described in the corresponding description of these figures.

The method 1200 may further comprise varying the number of active levels 1203 based on at least one of the input voltage $V_{in}$ 501, the output voltage $V_{out}$ 515, or the ratio between the input voltage $V_{in}$ 501 and the output voltage $V_{out}$ 515.

By operating an n-level FCML buck converter in a level switcher mode of operation, a reduction in variation of the switching period may be achieved. Reducing variation of the switching period may be particularly important in applications where the input voltage is likely to vary significantly. Such applications include aircrafts where DC power distribution is used. Here, the high voltages may be used in the aircraft's propulsion systems, while the lower voltages may be used elsewhere in the aircraft. In these applications, the high input voltage may have a wide variation, such as a variation between 400v to 750V. In some applications, the high voltage DC bus used in aircraft applications may even reach in excess of 3kV. Therefore, the reduction on switching frequency range may lead to better EMI management and optimized EMI filter size.

Other important considerations in aerospace applications include volume and weight reduction. This is typically achieved in power converters by increasing frequency operation, which leads to size reduction of the passive elements (i.e., capacitors, inductors, etc.) which are key contributors to the overall volume and weight in power converters. However, it comes at the cost of higher switching losses and increased thermal dissipation. Consequently, both the semiconductor's temperature and the cooling system's size will increase, which are also limiting factors to be added to the passive elements volume and weight reduction. Hence, the importance of ZVS switching to reduce the switching losses, primarily as heat, is apparent in aerospace applications. This may enable the use of smaller and/or lighter cooling systems. Furthermore, ZVS switching operation may enable the converter to be smaller and/or lighter overall, e.g. by reducing the size of the cooling system or by enabling more freedom in design choices, such as selection of switches.

By removing part of the semiconductor's switching losses, the technique enables the power converter's switching frequency to increase, and the overall weight and volume of the system are reduced. Differently from other options to achieve ZVS, which rely on resonant converters or auxiliary circuits, the QSW can be applied to traditional DC-DC converters without the requirement of any extra circuits or complex control techniques. The simple design and implementation of the n-level QSW FCML buck converter 500 is able to be deployed with both analogue and digital control. Moreover, operating QSW necessarily requires larger current ripple at the power inductor which, apart from the switching frequency variable, can also lead to further reductions in the magnetics weight and volume.

Hence, the high voltage advantages of a multi-level converter as the FCML are combined to the high-frequency, low-losses, QSW and TCM operating modes to enable soft-switching of the switching elements. Therefore, the n-level FCML buck converter 500 may result in high-voltage, high-frequency, low-losses and reduced size converter, which is particularly interesting for electrified aircrafts with high voltage DC distribution.

If compared to a traditional two-level buck converter, the n-level FCML buck converter 500 at the same switching frequency has much smaller passive components and voltage stress over the semiconductors, e.g. the voltage across each switching element is significantly lower. This already sets a clear advantage in power density and specific power over a two-level buck converter despite the increased number of active components. For example, this may result in a significant reduction on breakdown voltage for devices, enabling the use of automotive graded GaN or Si devices for HV applications. By applying a QSW ZVS technique to the converter, its switching frequency can be pushed higher resulting in even greater achievements in power density and specific power. Such an outcome can be very beneficial in an aerospace market moving towards more electrified aircrafts, where more and more DC/DC interfaces to energy storage systems are required.

## Claims

1. An n-level flying capacitor multi-level buck converter, for converting a DC input voltage into a DC output voltage provided at a load, comprising:

   an output filter comprising:

   an inductor arranged in series with an output capacitor and for arranging in series with the load; and
   the output capacitor arranged in series with the inductor and for arranging in parallel with the load;

   wherein the n-level flying capacitor multi-level buck converter comprises:

   a first pair of switching elements arranged in series with the DC input voltage; and
   a second pair of switching elements arranged in series with the DC input voltage;
   wherein each of the first and second pairs of switching elements comprises a first switching element and a second switching element;
   wherein the first switching element and the second switching element of the first pair of switching elements are arranged adjacent each other;
   wherein the first switching element of the second pair of switching elements is arranged adjacent to the first switching element of the first pair of switching elements;
   wherein the second switching element of the second pair of switching elements is arranged adjacent to the second switching element of the first pair of switching elements; and
   wherein the output filter is arranged in series with the first switching elements of the first and second pairs of switching elements, and in parallel with the second switching elements of the first and second pairs of switching elements;

   wherein the n-level flying capacitor multi-level buck converter further comprises a first flying capacitor in parallel with the first pair of switching elements;
   and wherein the n-level flying capacitor multi-level buck converter is configured to:

   operate the first and second pairs of switching elements in a sequence to selectively apply a portion of the input voltage across the output filter; and
operate the first and second pairs of switching elements such that each switching element is switched on when a voltage across the switching element is zero.

2. The n-level flying capacitor multi-level buck converter as claimed in claim 1, wherein the n-level flying capacitor multi-level buck converter further comprises a third pair of switching elements:

wherein the third pair of switching elements is arranged in series with the DC input voltage;
wherein the third pair of switching elements comprises a first switching element and a second switching element;
wherein the first switching element of the third pair of switching elements is arranged adjacent to the first switching element of the second pair of switching elements;
wherein the second switching element of the third pair of switching elements is arranged adjacent to the second switching element of the second pair of switching elements;
wherein the output filter is arranged in series with the first switching element of the third pair of switching elements, and in parallel with the second switching element of the third pair of switching elements; and
wherein the n-level flying capacitor multi-level buck converter further comprises a second flying capacitor in parallel with the second pair of switching elements; and
wherein the n-level flying capacitor multi-level buck converter is configured to:

operate the third pair of switching elements in a sequence to selectively apply a portion of the input voltage across the output filter; and
operate the third pairs of switching elements such that each switching element is switched on when a voltage across the switching element is zero.

3. The n-level flying capacitor multi-level buck converter as claimed in claim 1 or 2, wherein the first switching element of each pair of switching elements is arranged to be switched off before the second switching element of each pair of switching elements is switched on; and
wherein the second switching element of each pair of switching elements is arranged to be switched off before the first switching element of each pair of switching elements is switched on.

4. The n-level flying capacitor multi-level buck converter as claimed in claims 1, 2 or 3, wherein the n-level flying capacitor multi-level buck converter is arranged such that the current through the inductor is zero when the second switching element of each pair of switching elements is switched off.

5. The n-level flying capacitor multi-level buck converter as claimed in claims 1, 2 or 3, wherein the n-level flying capacitor multi-level buck converter is arranged such that the current through the inductor is less than zero when the second switching element of each pair of switching elements is switched off.

6. The n-level flying capacitor multi-level buck converter as claimed in any one of the preceding claims, wherein the n-level flying capacitor multi-level buck converter is arranged such that the current through the inductor is a pre-determined value when the second switching element of each pair of switching elements is switched off.

7. The n-level flying capacitor multi-level buck converter as claimed in any one of the preceding claims, wherein the pairs of switching elements are arranged to be triggered by a series of phase shifted pulses:

wherein a phase shift of the phase shifted pulses corresponds to a number of active levels of the n-level flying capacitor multi-level buck converter; and
wherein a pulse width of the phase shifted pulses corresponds to a duty cycle of the n-level flying capacitor multi-level buck converter.

8. The n-level flying capacitor multi-level buck converter as claimed in any one of the preceding claims, wherein the n-level flying capacitor multi-level buck converter is configured to operate the pairs of switching elements to change a or the number of active levels of the n-level flying capacitor multi-level buck converter.

9. The n-level flying capacitor multi-level buck converter as claimed in claim 8, wherein the n-level flying capacitor multi-level buck converter is configured to reduce the number of active levels by switching on both the first switching element and the second switching element of the pair of switching elements arranged proximate to the DC input voltage.

10. The n-level flying capacitor multi-level buck converter as claimed in claim 9, wherein the n-level flying capacitor multi-level buck converter further comprises a third pair of switching elements:

wherein the third pair of switching elements are arranged in series with the DC input voltage;
wherein the third pair of switching elements comprises a first switching element and a second switching element;
wherein the first switching element of the third pair of switching elements is arranged adjacent to the first switching element of the second pair of switching elements;
wherein the second switching element of the third pair of switching elements is arranged adjacent to the second switching element of the second pair of switching elements;
wherein the output filter is arranged in series with the first switching element of the third pair of switching elements, and in parallel with the second switching element of the third pair of switching elements; and
wherein the n-level flying capacitor multi-level buck converter further comprises a flying capacitor in parallel with the second pair of switching elements; and
wherein the n-level flying capacitor multi-level buck converter is configured to further reduce the number of active levels by switching on both the first switching element and the second switching element of the pair of switching elements adjacent to the pair of switching elements which are arranged proximate to the DC input voltage.

11. The n-level flying capacitor multi-level buck converter as claimed in claim 8, 9 or 10, wherein the n-level flying capacitor multi-level buck converter is configured to change the number of active levels depending on at least one of the input voltage, the output voltage or the ratio between the input voltage and the output voltage.

12. The n-level flying capacitor multi-level buck converter as claimed in any one of the preceding claims, wherein the n-level flying capacitor multi-level buck converter further comprises a controller arranged to generate a or the series of phase shifted pulses to trigger the pairs of switching elements of the n-level flying capacitor multi-level buck converter: wherein a or the phase shift of the phase shifted pulses corresponds to a or the number of active levels of the n-level flying capacitor multi-level buck converter; and wherein a or the pulse width of the phase shifted pulses corresponds to a or the duty cycle of the n-level flying capacitor multi-level buck converter.

13. The n-level flying capacitor multi-level buck converter as claimed in claim 12, wherein the controller further comprises a current feedback loop which adjusts a switching frequency of the switching elements based on a current through the inductor.

14. The n-level flying capacitor multi-level buck converter as claimed in claim 12 or 13, wherein the controller further comprises a voltage feedback loop which adjusts the duty cycle based on the at least one of the input voltage, the output voltage or the ratio between the input voltage and the output voltage.

15. A method of operating an n-level flying capacitor multi-level buck converter, for converting a DC input voltage into a DC output voltage provided at a load, wherein the n-level flying capacitor multi-level buck converter comprises:

an output filter comprising:

an inductor arranged in series with an output capacitor and for arranging in series with the load; and
the output capacitor arranged in series with the inductor and for arranging in parallel with the load;

wherein the n-level flying capacitor multi-level buck converter comprises:

a first pair of switching elements arranged in series with the DC input voltage; and
a second pair of switching elements arranged in series with the DC input voltage;
wherein each of the first and second pairs of switching elements comprises a first switching element and a second switching element;
wherein the first switching element and the second switching element of the first pair of switching elements are arranged adjacent;
wherein the first switching element of the second pair of switching elements is arranged adjacent to the first switching element of the first pair of switching elements;
wherein the second switching element of the second pair of switching elements is arranged adjacent to the second switching element of the first pair of switching elements; and
wherein the output filter is arranged in series with the first switching elements of the first and second pairs of switching elements, and in parallel with the second switching elements of the first and second pairs of switching elements;

wherein the n-level flying capacitor multi-level buck converter further comprises a flying capacitor in parallel with the first pair of switching elements;

wherein the method comprises:

operating the first and second pairs of switching elements in a sequence to selectively apply a portion of the input voltage across the output filter; and

operating the first and second pairs of switching elements such that each switching element is switched on when a voltage across the switching element is zero.

Figure 1

Figure 2

Figure 3a

Figure 3b

Figure 4

Figure 5

Figure 6

Figure 7

Figure 8c

Figure 8b

Figure 8a

Figure 9

Figure 10a

Figure 10b

Figure 10c

1101 — Operating the pairs of switching elements to vary the output filter voltage

1100

1102 — Operating the switching elements to turn on ZVS

1103 — Generating a series of pulses to trigger the switching elements

1104 — Varying the switching frequency depending on inductor current

1105 — Varying the duty cycle depending on $V_{in}$, $V_{out}$ or the ratio of $V_{in}$ to $V_{out}$

Figure 11

1201

Operating the pairs of switching elements to vary the output filter voltage

1200

1202

Operating the pairs of switching elements to change the number of active levels

1202

Varying the number of active levels depending on $V_{in}$, $V_{out}$ or the ratio of $V_{in}$ to $V_{out}$

Figure 12

Europäisches Patentamt

European Patent Office

Office européen des brevets

## EUROPEAN SEARCH REPORT

Application Number

**EP 23 18 3994**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG PENG: "A Method of Reconfiguring Flying Capacitor Multilevel Input Stage for Wide Input Voltage Range Converter Design", IEEE TRANSACTIONS ON POWER ELECTRONICS, INSTITUTE OF ELECTRICAL AND ELECTRONICS ENGINEERS, USA, vol. 37, no. 2, 18 August 2021 (2021-08-18), pages 1-8, XP011883245, ISSN: 0885-8993, DOI: 10.1109/TPEL.2021.3105369 [retrieved on 2021-10-14] | 1-8, 11-15 | INV. H02M1/00 H02M7/483 |
| Y | * figure 2 * * figure 3 * * figures 6-7 * * abstract * * page 1 - page 2 * | 9,10 | |
| Y | BLACKWELL MARGARET E ET AL: "Dynamic Level Selection for Full Range ZVS in Flying Capacitor Multi-Level Converters", 2018 IEEE 19TH WORKSHOP ON CONTROL AND MODELING FOR POWER ELECTRONICS (COMPEL), IEEE, 25 June 2018 (2018-06-25), pages 1905-1925, XP033402405, DOI: 10.1109/COMPEL.2018.8460086 [retrieved on 2018-09-10] | 9,10 | |
| A | * figure 2 * * page 1909 * | 1-8, 11-15 | |

TECHNICAL FIELDS SEARCHED (IPC)

H02M

The present search report has been drawn up for all claims

| Place of search | Date of completion of the search | Examiner |
|---|---|---|
| The Hague | 4 December 2023 | Riehl, Philippe |

EPO FORM 1503 03.82 (P04C01)